# EUROPEAN PATENT SPECIFICATION

(11) **EP 3 355 701 B1**
(45) Date of publication and mention of the grant of the patent: **04.11.2020**
(21) Application number: 16778892.6
(22) Date of filing: 30.09.2016
(51) Int. Cl.: A23C 9/15, A23C 9/20, A23L 33/00, A23L 33/18, A23L 33/19, A23J 3/10, A61K 38/18

(54) **LIQUID NUTRITIONAL COMPOSITION COMPRISING MICELLAR CASEIN AND HYDROLYSED WHEY PROTEIN**
FLÜSSIGE NÄHRSTOFFZUSAMMENSETZUNG MIT MIZELLAREM KASEIN UND HYDROLYSIERTEM MOLKEPROTEIN
COMPOSITION NUTRITIONNELLE LIQUIDE COMPRENANT DE LA CASÉINE MICELLAIRE ET UNE PROTÉINE LACTOSÉRIQUE HYDROLYSÉE

(30) Priority: 01.10.2015 EP 15187948; 14.04.2016 EP 16165308
(43) Date of publication of application: 08.08.2018
(73) Proprietor: FrieslandCampina Nederland B.V., 3818 LE Amersfoort (NL)
(72) Inventor: SMULDERS, Pauline Elisabeth Antoinette, 6700 AE Wageningen (NL); SCHLATMANN, Jurriaan Ernst, 6700 AE Wageningen (NL)
(74) Representative: FrieslandCampina Nederland B.V.
(86) International application number: PCT/IB2016/055859
(87) International publication number: WO 2016/174651

(56) References cited:
- WO-A1-2009/072869
- WO-A1-2009/072884
- WO-A1-2009/072885
- WO-A1-2010/140877
- WO-A1-2015/181181
- JP-A- 2013 176 357
- US-A- 5 766 621
- US-A1- 2006 073 186
- US-A1- 2011 081 424
- Friesland Campina Dv: "Refit MCI 80 - DMV", , 25 January 2016 (2016-01-25), pages 1-5, XP055244550, Retrieved from the Internet: URL:https://www.dmv.nl/en/markets-ingredie nts/ingredient/refit-mci-80/ [retrieved on 2016-01-25]
- MURPHY EOIN G ET AL: "Physical stability of infant milk formula made with selectively hydrolysed whey proteins", INTERNATIONAL DAIRY JOURNAL, ELSEVIER APPLIED SCIENCE, BARKING, GB, vol. 40, 29 August 2014 (2014-08-29), pages 39-46, XP029095101, ISSN: 0958-6946, DOI: 10.1016/J.IDAIRYJ.2014.08.012
- FARRELL H M ET AL: "Casein micelle structure: What can be learned from milk synthesis and structural biology?", CURRENT OPINION IN COLLOID AND INTERFACE SCIENCE, LONDON, GB, vol. 11, no. 2-3, 1 June 2006 (2006-06-01) , pages 135-147, XP024966919, ISSN: 1359-0294, DOI: 10.1016/J.COCIS.2005.11.005 [retrieved on 2006-06-01]
- FOX P F ET AL: "The casein micelle: Historical aspects, current concepts and significance", INTERNATIONAL DAIRY JOURNAL, ELSEVIER APPLIED SCIENCE, BARKING, GB, vol. 18, no. 7, 1 July 2008 (2008-07-01), pages 677-684, XP022701021, ISSN: 0958-6946, DOI: 10.1016/J.IDAIRYJ.2008.03.002 [retrieved on 2008-03-07]

## Description

### Field of the invention

The invention is in the field of liquid nutritional compositions. More particular the invention relates to a liquid nutritional composition having a relatively high protein content, in particular to a liquid nutritional composition comprising micellar casein and hydrolysed whey protein, more in particular to a heat-treated liquid nutritional composition comprising micellar casein and hydrolysed whey protein.

### Background of the invention

There are many instances where individuals may be in need of special, high protein diets. Elderly, or children, may suffer from malnutrition, for example due to certain afflictions associated with their age, due to diseases or as the result of surgery or to support drug therapy.

For example, patients who have had bariatric surgery and are on a post-operative fluid diet after surgery may rely on protein drinks when they are unable to gain enough protein from food alone. Formulations for bariatric patients may be high in protein content but lower in fat and carbohydrate content in order to control the overall intake of calories.

There are instances where individuals have to rely on liquid nutritional compositions as their sole source of nutrition, for example surgical patients, patients who suffered a trauma or receive cancer therapy, or individuals whose general health status makes them too weak, or unwilling, to eat or drink at all or in insufficient amounts. Often such individuals have to rely on sip feeding or tube feeding. Medical compositions for enteral use may comprise, in addition to a relatively high concentration of protein, sources of fat and carbohydrate that together bring the total energy density to values in the range of e.g. 1.5 - 2.5 kcal/ml, especially when the compositions are concentrated compositions intended for patients with a fluid restriction. Compositions intended to provide a complete diet, such as enteral compositions intended for sip feeding and/or tube feeding, may also contain the required amounts of vitamins, minerals and optionally fiber.

Nutritional compositions comprising a relatively high amount of protein may be used as a whole diet, but also as a supplement, depending on the intended use and needs and the general health state of an individual. Nutritional protein supplements are also used by athletes to build and support muscle mass.

The protein source on which nutritional compositions are based may vary. In nutritional compositions containing high concentrations of proteins, usually dairy proteins such as milk protein isolate or milk protein concentrate, micellar casein, caseinate(s) such as sodium caseinate, potassium caseinate or calcium caseinate, or whey protein are used. Dairy proteins may also be supplemented with other protein sources such as soy, rice and/or pea protein, and/or hydrolysed collagen. Certain protein preparations may be based entirely on a combination of a vegetable protein source, (milk) casein protein and/or whey proteins in varying amounts.

A known problem with concentrated compositions is that the high concentration of protein may lead to a high viscosity of the composition, especially after heat-treatment of the compositions (e.g. to sterilize them). This is particularly problematic in compositions intended for use as a sip feed or a tube feed in medical nutrition, which may also contain fat, carbohydrates and vitamins and minerals. In compositions intended for sip or tube feeding, the viscosity is an issue. Also for patients who have problems swallowing, viscosity of the composition is important. In compositions intended for sip or tube feeding, particularly in compositions intended for sip feeding, it is important that a relatively small serving of the composition comprises a high amount of protein, and preferably also carbohydrate and/or fat. In these compositions it is further preferred that the energy density is relatively high, e.g. in the range of 1.5 - 2.5 kcal/ml.

A lot of work has already gone into finding an acceptable balance between desired protein concentration and calorie content on the one hand, and parameters such as costs, taste, contents of other ingredients such as fat and carbohydrates, but also desired levels of minerals such as sodium, potassium, calcium, phosphorous etc., and heat stability and viscosity on the other.

A nutritional composition entirely based on casein is disclosed in US 5683984. In US 5683984 a nutritional composition is disclosed, the composition comprising 5 to 10 wt.% of native micellar casein. The composition has a thermal stability that is sufficient to withstand heat-treatment, and a low viscosity.

EP 1401293 relates to a calorically dense liquid oral supplement wherein the protein source provides 14 to 20 % of the total caloric content of the product. The protein consists of a caseinate and soy protein isolate, wherein the caseinate and soy protein isolate are present at a ratio of 75:25 to 50:50. The composition has a caloric density of at least 2.25 calories per ml, whilst providing a sufficiently low viscosity to allow the supplement to be easily consumed orally.

In WO 2009/072886 a liquid enteral nutritional compositions is disclosed, the composition comprising 10 to 20 g of protein per 100 ml, wherein all or a major part of the protein comprises native micellar casein. The amount of native micellar casein is preferably at least 70 wt.%.

EP 2230940 discloses to combine micellar casein with caseinates in compositions with a protein concentration between 8-14 g/ 100 ml and an energy density of at least 2.0 kcal/ml. The weight ratio of micellar casein to caseinate is from 90:10 to 35:65, wherein the combined amount of micellar casein and caseinate is at least 70 wt.% of the total protein in the compositions. The aim here also was to provide compositions with sufficiently low viscosity to allow the composition to be easily consumed orally or be administered by tube.

In EP 2537424 another high caloric enteral tube formula having an energy content of at least 2.0 kcal per ml is disclosed. This composition comprises, per 100 ml, about 8.0 g to about 14.0 g of protein wherein the protein comprises total milk protein and calcium caseinate. This composition has a viscosity of about 50 to about 180 mPas at a temperature of 20°C and at a shear rate of 1 s⁻¹.

In WO 2014/099795, a low viscosity, high caloric density liquid nutritional composition with 8 to 27 g protein per 100 ml is disclosed. The protein comprises non-micellar milk protein isolate and/or non-micellar milk protein concentrate, and a partially hydrolysed caseinate. The viscosity of the compositions described in WO 2014/099795 is between 45 and 140 cps (45 and 140 mPa s), their caloric density 2 - 3 kcal per ml.

Other combinations of proteins have been used in commercial products for medical nutrition. For example EP 961552 discloses a nutritional composition wherein the protein source comprises 50% casein and preferably 50% whey, wherein the whey may be hydrolysed. The protein concentration is around 3 g protein per 100 ml.

### Summary of the invention

The present invention relates to a heat-treated liquid nutritional composition comprising 8 - 20 g of protein per 100 ml of the composition, wherein at least 50 wt.% of the protein is micellar casein and at least 10 wt.% of the protein is hydrolysed whey protein wherein the hydrolysed whey protein has a degree of hydrolysation in the range 1-25%.

In particular, the invention relates to a heat-treated liquid nutritional composition comprising 8 - 20 g of protein per 100 ml of the composition, wherein at least 50 wt.% of the protein is micellar casein and at least 10 wt.% of the protein is hydrolysed whey protein, wherein the hydrolysed whey protein has a degree of hydrolysation in the range 1-25%, wherein the composition further comprises fat and carbohydrate, and wherein the composition has an energy density in the range of 1.5 to 3.5 kcal/ml.

The invention also relates to a protein composition comprising at least 80 wt.% of protein, based on dry matter of the total composition, wherein at least 50 wt.% of the protein is micellar casein and at least 10 wt.% of the protein is hydrolysed whey protein, wherein the hydrolysed whey protein has a degree of hydrolysation in the range 1-25%.

The invention further relates to the use of the protein composition according to the invention for the manufacture of a nutritional composition according to the invention.

In addition, the invention relates to a method for the manufacture of the nutritional composition according the invention, the method comprising:
(a) providing a composition comprising water and the protein composition according to the invention, and optionally further comprising carbohydrate, fat, vitamins and/or minerals; and
(b) subjecting the obtained composition to a heat-treatment.

### Description of the Figures

In Figure 1, the viscosity of several liquid nutritional compositions according to the invention is shown, as well as the viscosity of several comparative compositions.
In Figure 2 the viscosity of a composition according to the invention is compared to the viscosity of a comparative composition, after a storage time at 20°C of 1 day and 1 month.
Also in Figure 3 the viscosity of compositions according to the invention is compared to the viscosity of a comparative composition, after a storage time at 5°C of 1 day and 1 month.

### Detailed description of the invention

The verb "to comprise" as is used in this description and in the claims and its conjugations is used in its non-limiting sense to mean that items following the word are included, but items not specifically mentioned are not excluded.
In addition, reference to an element by the indefinite article "a" or "an" does not exclude the possibility that more than one of the element is present, unless the context clearly requires that there is one and only one of the elements. The indefinite article "a" or "an" thus usually means "at least one".
The term "about" is used herein to indicate that a certain deviation from a cited value is allowed. The magnitude of this deviation, depending amongst others on the accuracy of the method to determine the cited value, is generally in the range of ± 10 %, more in particular in the range of ± 5 %, of the cited value.
The term "nutritional composition" as used herein refers to a nutritional composition comprising one or more of protein, carbohydrate and fat. The nutritional composition may comprise further components, e.g. vitamins and minerals. The nutritional composition may be formulated as a complete nutrition, and potentially serve as the sole source of nutrition. Alternatively, the nutritional composition may be in the form of a food supplement.
The term "enteral nutritional composition" herein refers to a nutritional composition that may be administered to a person enterally, i.e. orally or by tube. Examples of an enteral nutritional composition include a sip feed and a tube feed.
The term "heat-treated nutritional composition" herein refers to a nutritional composition that has undergone a heat-treatment. The term "heat-treatment" herein refers to a treatment at an elevated temperature, aimed at increasing the shelf-life of said nutritional composition. Examples of a heat-treatment include pasteurization, sterilization and UHT (ultra-heat-treatment or ultra-high-temperature processing).
The term "shelf-stable" herein refers to storage stability. A nutritional composition is shelf-stable if it is storage stable at ambient temperature with respect to microbiological spoilage and physical defects like creaming, gelation, precipitation, etc., for a certain amount of time. Preferably, a nutritional composition has a shelf-stability of at least one month, more preferably at least 3 months, even more preferably at least 6 months and most preferably at least 12 months after packaging, when stored in a sealed packaging at ambient temperature (20 °C).

### Liquid nutritional composition

The present invention relates to a liquid nutritional composition comprising 8 - 20 g of protein per 100 ml of the composition, wherein at least 50 wt.% of the protein is micellar casein and at least 10 wt.% of the protein is hydrolysed whey protein, wherein the hydrolysed whey protein has a degree of hydrolysation in the range 1-25%.

In particular, the present invention relates to a heat-treated liquid nutritional composition comprising 8 - 20 g of protein per 100 ml of the composition, wherein at least 50 wt.% of the protein is micellar casein and at least 10 wt.% of the protein is hydrolysed whey protein, wherein the hydrolysed whey protein has a degree of hydrolysation in the range 1-25%. The composition according to the invention may further comprise carbohydrate and/or fat. Protein, carbohydrate and fat are described in more detail below.

Preferably, the composition has a high energy density, more preferably the composition has an energy density in the range of 1.5 to 3.5 kcal/ml. The nutritional composition preferably is an enteral nutritional composition. The nutritional composition may be formulated as a complete nutrition, and potentially serve as the sole source of nutrition. Alternatively, the nutritional composition may be in the form of a food supplement.

### Protein

The nutritional composition according to the invention comprises 8 - 20 g of protein per 100 ml of the composition.

The total protein that is present in the nutritional composition, i.e. the combination of all proteins present, may also be referred to as the "protein fraction" of the nutritional composition. The nutritional composition thus comprises a protein fraction of 8 - 20 g per 100 ml of the composition. In a preferred embodiment the composition comprises a protein fraction of 8.5 - 19 g per 100 ml of the composition, more preferably of 9 - 18 g, of 9.5 - 17 g, of 10 - 16 g or of 10 - 15.5 g per 100 ml of the composition. Most preferably the composition comprises a protein fraction of 10 - 15 g per 100 ml of the composition.

According to one embodiment of the present invention, the protein provides 10 to 55%, preferably 10 to 40%, of the total energy content of the composition, i.e. 10 to 55 EN%, preferably 10 to 40 EN%.

As described above, at least 50 wt.% of the protein in the nutritional composition is micellar casein. In a preferred embodiment at least 55 wt.%, and most preferably at least 60 wt.% of the protein is micellar casein. In other words, the protein fraction of the nutritional composition comprises 50 wt.% or more, even more preferably 55 wt.% or more, and most preferably 60 wt.% or more of micellar casein, based on the total weight of the protein fraction.

It is further preferred that 90 wt.% or less of the protein is micellar casein, more preferably 85 wt.% or less, for example 80 wt.% or less, 75 wt.% or less or 70 wt.% or less. In other words, it is preferred that the protein fraction of the nutritional composition comprises 90 wt.% or less, preferably 85 wt.% or less, for example 80 wt.% or less, 75 wt.% or less or 70 wt.% or less of micellar casein, based on the total weight of the protein fraction.

Fresh milk contains about 2.6 g casein per 100 ml, and almost all casein is present in the form of casein micelles (Walstra et al., "Dairy Science and Technology", 2nd Ed., CRC Press 2006). Micellar casein may also be referred to as native micellar casein. However, the nature of the micelles in micellar casein as comprised in fresh milk may alter during processing, without the casein actually losing its micellar structure. Within the context of this invention, the term "micellar casein" refers to native micellar casein as present in fresh milk, but also to micellar casein wherein the micellar structure and/or composition may differ from the micellar structure and/or composition as present in fresh milk. In contrast, casein that has lost its micellar structure, e.g. by acid precipitation, is herein referred to as "caseinate".

Processes to concentrate micellar casein from milk, e.g. by filtration, are known in the art and several sources of micellar casein are commercially available. Micellar casein isolate (MCI) typically comprises about 80 wt.% or more of protein, based on dry matter. Based on protein dry matter, MCI typically comprises about 90 wt.% or more of micellar casein, preferably about 95 wt.%. In milk protein concentrate (MPC) and milk protein isolate (MPI) the about 80:20 natural ratio of micellar casein to whey is largely preserved. Typically, MPC comprises about 80 wt.% protein and MPI 85 wt.% or more, based on dry matter.

A particularly preferred source of micellar casein is MCI. MCI is, amongst others, commercially available from several suppliers, including FrieslandCampina DOMO (Amersfoort, the Netherlands).

At least 10 wt.% of the protein in the nutritional composition according to the invention is hydrolysed whey protein. Preferably, at least 15 wt.% and more preferably more than 15 wt.%, e.g. 15.5 or 16 wt.% of the protein is hydrolysed whey protein. In a further preferred embodiment at least 20 wt.%, more preferably at least 25 wt.% and most preferably at least 30 wt.% of the protein is hydrolysed whey protein. In other words, the protein fraction of the nutritional composition comprises 10 wt.% or more of hydrolysed whey protein, based on the total weight of the protein fraction, preferably 15 wt.% or more and more preferably more than 15 wt.%, e.g. 15.5 or 16 wt.% of hydrolysed whey protein, based on the total weight of the protein fraction. More preferably the protein fraction of the nutritional composition comprises 20 wt.% or more of hydrolysed whey protein, based on the total weight of the protein fraction, e.g. 25 wt.% or more or 30 wt.% or more.

It is further preferred that 50 wt.% or less, preferably less than 50 wt.%, of the protein is hydrolysed whey protein, e.g. 45 wt.% or less or 40 wt.% or less.

The term "hydrolysed whey protein" herein refers to whey protein that has been processed and/or treated in a manner intended to break peptide bonds. The term "hydrolysed whey protein" thus refers to whey protein that is at least partially hydrolysed. Intentional hydrolysis may be carried out by e.g. treating intact protein with one or more enzymes and/or with acids or bases.

A measure for the extent of hydrolysation of the whey protein is the "degree of hydrolysation" (DH). The degree of hydrolysation is defined as the percentage of the total number of peptide bonds in a protein that has been cleaved during hydrolysis. The degree of hydrolysis of a protein may e.g. be determined by the trinitrobenzenesulphonic acid (TNBS) procedure, as known in the art (Adler-Nissen, J. Agr. Food Chem. 1979, 27(6), 1256). When whey protein is subjected to a hydrolysis process, the source of whey protein may already comprise a certain (small) amount of peptide fractions, before being subjected to the hydrolysis process. The values for the degree of hydrolysation as described herein are corrected for this presence of peptide-fractions in the whey protein source, in other words, the values for the degree of hydrolysation are corrected for the natural degree of hydrolysation of whey protein. Herein, the degree of hydrolysation thus relates to the additional hydrolysation that was obtained via the intentional hydrolysis process.

The main proteins in whey protein are α-lactalbumin and β-lactoglobulin. Whey protein comprises about 18 wt.% α-lactalbumin and about 50 wt.% β-lactoglobulin, based on total protein. Additional proteins in whey protein include serum albumin and immunoglobulins. It is to be understood that the term hydrolysed whey protein as used herein also refers to whey protein wherein e.g. either the α-lactalbumin or the β-lactoglobulin is, at least partially, hydrolysed. Consequently, the hydrolysed whey protein may still comprise intact protein. As defined above, the term "hydrolysed whey protein" refers to whey protein that has been processed and/or treated in a manner intended to break peptide bonds. This definition includes a treatment of whey protein in a manner that is intended to break peptide bonds in one of the proteins constituting whey protein preferentially, leaving other proteins substantially intact. The term hydrolysed whey protein thus also refers to whey protein that has been treated in a manner intended to break peptide bonds in β-lactoglobulin, leaving α-lactalbumin wholly or partly intact, and to whey protein that has been treated in a manner intended to break peptide bonds in α-lactalbumin, leaving β-lactoglobulin wholly or partly intact.

The hydrolysed whey protein has a degree of hydrolysation of 1-25%. Preferably, the degree of hydrolysation is 1.5-25%, more preferably 2-25%, and even more preferably 3-25%. It is particularly preferred that the degree of hydrolysation of the whey protein is in the range of 5 to 25%. As described above, the degree of hydrolysation as used herein is corrected for the natural degree of hydrolysation of the whey protein source, i.e. the whey protein that was used for the preparation of the hydrolysed whey protein.

In another particular embodiment of the nutritional composition, the hydrolysed whey protein comprises 40 wt.% or less intact protein, preferably 30 wt.% or less intact protein, more preferably 20 wt.% or less intact protein, even more preferably 15 wt.% or less intact protein and yet even more preferably 10 wt.% or less intact protein, based on total protein in the hydrolysed whey protein.

In another particular embodiment it is preferred that the hydrolysed whey protein comprises 5 wt.% or less intact protein, preferably 3 wt.% or less and more preferably 1 wt.% or less intact protein, based on total protein in the hydrolysed whey protein. Intact protein may be removed from hydrolysed whey protein by a filtration process, as is known in the art.

In another particular embodiment of the nutritional composition, the hydrolysed whey protein is a hydrolysed whey protein obtainable by a hydrolysis process wherein β-lactoglobulin is hydrolysed preferentially. In this embodiment the hydrolysed whey protein comprises 20 wt.% or less intact β-lactoglobulin, preferably 15 wt.% or less, more preferably 10 wt.% or less and most preferably 5 wt.% or less, based on total protein in the hydrolysed whey protein. In this embodiment it is further preferred that the hydrolysed whey protein comprises 3 wt.% or more, preferably 5 wt.% or more of intact α-lactalbumin, based on total protein in the hydrolysed whey protein.

Processes for the manufacturing of hydrolysed whey protein are known in the art. Hydrolysed whey protein may for example be prepared by subjecting whey protein concentrate (WPC), whey protein isolate (WPI), serum protein concentrate (SPC) or serum protein isolate (SPI) to an enzymatic hydrolysis process. Alternatively, hydrolysed whey protein may be prepared by acid or base hydrolysis of whey protein. WPC, WPI, SPC and SPI may be obtained by processes known in the art, such as the processing of sweet whey or acid whey, ultrafiltration or microfiltration processes.

Whey protein concentrate (WPC) typically comprises about 35 to about 80 wt.% protein, based on dry matter. Whey protein isolate (WPI) typically comprises about 85 wt.% or more protein, based on dry matter. Serum protein concentrate (SPC) typically comprises about 60 wt.% protein, based on dry matter. Serum protein isolate (SPI) typically comprises about 85 wt.% protein, based on dry matter.

Hydrolysed whey protein is commercially available from several suppliers. Examples of suitable sources of hydrolysed whey protein include products of the Hyvital hydrolysed whey protein range of FrieslandCampina Domo (Amersfoort, the Netherlands), e.g. Hyvital Whey ETD 100, Hyvital Whey ETD 110, Hyvital Whey 8016, Hyvital Whey 8022 and Hyvital Whey HA 300, and hydrolysed whey protein products available from, amongst others, Kerry (Ireland), Aria (Denmark) and Fonterra (New Zealand).

As described above, in the composition according to the invention at least 50 wt.% of the protein is micellar casein and at least 10 wt.% of the protein is hydrolysed whey protein. It is particularly preferred that at least 50 wt.% of the protein is micellar casein and/or at least 15 wt.% of the protein is hydrolysed whey protein. In a preferred embodiment the invention thus relates to a heat-treated liquid nutritional composition comprising 8 - 20 g of protein per 100 ml of the composition, wherein at least 50 wt.% of the protein is micellar casein and at least 15 wt.% of the protein is hydrolysed whey protein. It is further preferred that the composition comprises 8.5 - 19 g of protein per 100 ml of the composition, more preferably 9 - 18 g, 9.5 - 17 g, 10 - 16 g or 10 - 15.5 g of protein per 100 ml of the composition, and most preferably the composition comprises 10 - 15 g of protein per 100 ml of the composition.

In the nutritional composition according to the invention, the micellar casein and hydrolysed whey protein together constitute at least 60 wt.% of the protein, based on total weight of protein. It is further preferred that the micellar casein and hydrolysed whey protein together constitute at least 65 wt.%, at least 70 wt.%, at least 75 wt.%, at least 80 wt.%, at least 85 wt.%, at least 90 wt.% or at least 95 wt.%, based on total weight of protein.

In a particular embodiment of the nutritional composition, the ratio of micellar casein to hydrolysed whey protein is in the range of 1:1 to 9:1. The invention therefore also relates to a liquid nutritional composition comprising 8 - 20 g of protein per 100 ml of the composition, wherein at least 50 wt.% of the protein is micellar casein and at least 10 wt.% of the protein is hydrolysed whey protein, and wherein the ratio of micellar casein to hydrolysed whey protein is in the range of 1:1 to 9:1. Preferably, the liquid nutritional composition is heat-treated.

In this embodiment, the ratio of micellar casein to hydrolysed whey protein is for example in the range of 1:1 to 8:1, or 1:1 to 7:1, or 1:1 to 6:1, or 1:1 to 5:1, or 1:1 to 4:1, or 1:1 to 3:1, or 1:1 to 2:1. Preferably the ratio of micellar casein to hydrolysed whey protein is in the range of 1.3:1 to 9:1, more preferably in the range of 1.5:1 to 9:1, even more preferably in the range of 1.6:1 to 9:1. In this embodiment it is further preferred that the ratio of micellar casein to hydrolysed whey protein is in the range of 1.6:1 to 9:1, for example in the range of 1.6:1 to 8:1, or 1.6:1 to 7:1, or 1.6:1 to 6:1, or 1.6:1 to 5:1, or 1.6:1 to 4:1, or 1.6:1 to 3:1, or 1.6:1 to 2.5:1, or 1.6:1 to 2:1. The invention therefore also relates to a liquid nutritional composition comprising 8 - 20 g of protein per 100 ml of the composition, wherein at least 50 wt.% of the protein is micellar casein and at least 10 wt.% of the protein is hydrolysed whey protein, and wherein the ratio of micellar casein to hydrolysed whey protein is in the range of 1.6:1 to 9:1. Preferably, the liquid nutritional composition is heat-treated.

In a particular embodiment of the liquid nutritional composition, the nutritional composition comprises 8 - 20 g protein per 100 ml of the composition, wherein at least 60 wt.% of the protein is micellar casein and at least 10 wt.% of the protein is hydrolysed whey protein. Preferably at least 15 wt%, more preferably at least 20 wt% and most preferably at least 25 wt.% of the protein is hydrolysed whey protein. More preferably, at least 65 wt.% of the protein is micellar casein and at least 10 wt.%, preferably at least 15 wt.%, more preferably at least 20 wt.% and most preferably at least 25 wt.%, of the protein is hydrolysed whey protein.

In this embodiment it is further preferred that the liquid nutritional composition comprises 60-90 wt.% micellar casein and 10-40 wt.% hydrolysed whey protein, based on total protein. More preferably the nutritional composition comprises 60-80 wt.% micellar casein and 20-40 wt.% hydrolysed whey protein, more preferably 60-75 wt.% micellar casein and 25-40 wt.% hydrolysed whey protein, and most preferably 65-75 wt.% micellar casein and 25-35 wt.% hydrolysed whey protein, all based on total protein. The invention therefore also relates to a heat-treated liquid nutritional composition comprising 8 - 20 g of protein per 100 ml of the composition, wherein 60-90 wt.% of the protein is micellar casein and 10-40 wt.% of the protein is hydrolysed whey protein. Preferably 60-80 wt.% of the protein is micellar casein and 20-40 wt.% hydrolysed whey, more preferably 60-75 wt.% of the protein is micellar casein and 25-40 wt.% hydrolysed whey, and most preferably 65-75 wt.% of the protein is micellar casein and 25-35 wt.% hydrolysed whey, all based on total protein.

In these embodiments it is further preferred that the micellar casein and hydrolysed whey protein together constitute at least 70 wt.% of the protein, based on total protein, more preferably at least 75, even more preferably at least 80 wt.%, yet even more preferably at least 85 wt.%, yet even more preferably at least 90 wt.% and most preferably at least 95 wt.% of the protein, all based on total protein.

Also in these embodiments it is further preferred that the composition comprises 8.5 - 19 g of protein per 100 ml of the composition, more preferably 9 - 18 g, 9.5 - 17 g, 10 - 16 g or 10 - 15.5 g of protein per 100 ml of the composition, and most preferably the composition comprises 10 - 15 g of protein per 100 ml of the composition.

Also in these embodiments the liquid nutritional is preferably heat-treated.

In addition to micellar casein and hydrolysed whey protein, the protein fraction may comprise one or more additional proteins. The additional protein may e.g. be selected from the group consisting of intact whey protein, intact or hydrolysed caseinate, intact or hydrolysed plant protein, intact or hydrolysed algal protein and hydrolysed collagen.

The term caseinate herein refers to casein that has lost its micellar structure. Preferably the caseinate, if present, is selected from the group consisting of sodium caseinate, calcium caseinate, potassium caseinate and magnesium caseinate, more preferably from the group consisting of calcium caseinate, potassium caseinate and sodium caseinate.

Plant proteins may be grouped by their origin, and include proteins originating from oil seeds, tuber, pulses, cereals, green leaf vegetables, legumes, etc. Examples of oil seed protein include soy protein, canola protein, rapeseed protein, etc. Examples of cereal protein include wheat protein, rice protein and quinoa protein. An example of a pulse seed protein is pea protein, and an example of a tuber (potato) protein is patatin. Examples of green leaf vegetable protein include protein derived from spinach, kale, etc. The term hydrolysed collagen herein also refers to hydrolysed gelatin.

Preferably, the one or more additional proteins, if present, are selected from the group consisting of intact or hydrolysed caseinate, intact or hydrolysed plant protein, intact or hydrolysed algal protein and hydrolysed collagen.

More preferably, the one or more additional proteins, if present, are selected from the group consisting of intact or hydrolysed sodium caseinate, calcium caseinate, potassium caseinate, magnesium caseinate, soy protein, canola protein, rapeseed protein, wheat protein, rice protein, quinoa protein, pea protein, hydrolysed collagen and hydrolysed gelatin, and more preferably from the group consisting of intact or hydrolysed calcium caseinate, potassium caseinate, sodium caseinate, magnesium caseinate, soy protein, canola or rapeseed protein, wheat protein, rice protein, quinoa protein, pea protein and hydrolysed collagen.

The one or more additional proteins, if present, constitute 40 wt.% or less, 35 wt.% or less, 30 wt.% or less, 25 wt.% or less, 20 wt.% or less, 15 wt.% or less, 10 wt.% or less or 5 wt.% or less, based on total weight of protein in the nutritional composition.

As described above, the nutritional composition according to the invention may be formulated as a complete nutrition, and potentially serve as the sole source of nutrition for a person in need thereof. Alternatively, the nutritional composition may be in the form of a food supplement.

In a preferred embodiment, the nutritional composition according to the invention has an energy density of 1.5 kcal/ml or higher (6.28 kJ/ml or higher), more preferably of 2.0 kcal/ml or higher (8.37 kJ/ml or higher), even more preferably of 2.5 kcal/ml or higher (10.46 kJ/ml or higher). It is further preferred that the energy density of the nutritional composition is 3.5 kcal/ml or lower (14.64 kJ/ml or lower).

The nutritional composition may comprise fat and/or carbohydrate. In one embodiment the composition further comprises fat, and in another embodiment the composition further comprises carbohydrate. In yet another embodiment the composition further comprises fat and carbohydrate. Fat and carbohydrate suitable for use in the nutritional composition according to the invention are described in more detail below.

As described above, it is preferred that the protein provides 10 to 55%, preferably 10 to 40%, of the total energy content of the composition. The carbohydrate, if present, preferably provides 20 to 60% of the total energy content of the composition, and the fat, if present, preferably provides 10 to 50% of the total energy content of the composition.

The invention therefore also relates to a heat-treated liquid nutritional composition comprising 8 - 20 g of protein per 100 ml of the composition, wherein at least 50 wt.% of the protein is micellar casein and at least 10 wt.% of the protein is hydrolysed whey protein, wherein the composition further comprises carbohydrate and fat, and wherein the protein provides 10 to 55%, preferably 10 to 40%, of the total energy content of the composition, the carbohydrate provides 20 to 60% of the total energy content of the composition and the fat provides 20 to 50% of the total energy content of the composition. Preferred embodiments of the amount of protein per 100 ml of the composition, and of the weight percentages of micellar casein and hydrolysed whey protein, based on total protein in the nutritional composition, are as described in more detail above.

### Carbohydrate

When the nutritional composition according to the present invention comprises carbohydrate, it is preferred that the carbohydrate provides 20 to 60% of the total energy content of the composition.

The carbohydrate may be provided by a single source, or by more than one source of carbohydrate. The carbohydrate may be a simple or a complex carbohydrate, or a mixture thereof. Carbohydrates suitable for use in a nutritional composition of the present invention are known to the person skilled in the art. Examples of suitable carbohydrates are described in more detail in for example WO 2013/025104, WO 2014/099795 and WO 2009/072885.

Non-limiting examples of suitable carbohydrates include maltodextrin, hydrolyzed, intact, naturally and/or chemically modified starch or cornstarch, malt, maltose, isomaltose, isomaltulose, glucose polymers, corn syrup, corn syrup solids, rice or potato derived carbohydrate, glucose, fructose, sucrose, lactose, trehalose, palatinose, high fructose corn syrup, and combinations thereof.

### Fat

When the nutritional composition according to the present invention comprises fat, it is preferred that the fat provides 20 to 50% of the total energy content of the composition.

The fat may be provided by a single source, or by more than one source of fat. The fat may be an animal fat or a vegetable fat, or a combination thereof. Preferably the fat, if present, is of vegetable origin. Suitable fats are known to the person skilled in the art, and described in more detail in for example WO 2013/025104, WO 2014/099795 and WO 2009/072885.

Non-limiting examples of sources of fat that are suitable for use in the nutritional composition include milk fat or milk fat fractions, food grade coconut oil, fractionated coconut oil, soy oil, corn oil, olive oil, rapeseed oil, safflower oil, high oleic safflower oil, MCT oil (medium chain triglycerides), sunflower oil, high oleic sunflower oil, palm and palm kernel oils, palm olein, canola oil, marine oils (e.g. fish oil), cottonseed oils, long-chain polyunsaturated fatty acids such as arachidonic acid (ARA), docosahexaenoic acid (DHA) and eicosapentaenoic acid (EPA), and combinations thereof. The nutritional composition may also comprise one or more structured lipids. Structured lipids are predominantly triacylglycerols containing mixtures of medium and long chain fatty acids on the same glycerol backbone. Structured lipids are known in the art, and described in e.g. US 4871768, US 6160007 and in Fitch Haumann, "Structured lipids allow fat tailoring", INFORM, 1997, 8(10), 1004.

### Chelating agent

In a preferred embodiment, the nutritional composition according to the invention comprises a chelating agent. The chelating agent is preferably selected from the group consisting of phosphoric acid, citric acid, a soluble phosphate salt, a soluble citrate salt, and a mixture thereof. Examples of soluble citrate salts include sodium citrate and potassium citrate.. Examples of soluble phosphate salts include sodium phosphate, potassium phosphate, disodium hydrogen phosphate and dipotassium hydrogen phosphate. Preferably the chelating agent is citric acid or a soluble citrate salt, or a combination thereof.

In this embodiment it is further preferred that the chelating agent is present in an amount of 0.5-10 g per 1000 ml of the nutritional composition. More preferably, the chelating agent is present in an amount of 0.5-8 g, even more preferably in an amount of 0.5-5 g, per 1000 ml of the nutritional composition.

As is known in the art, the presence of chelating agents may result in an alteration of the micel structure of micellar casein. It is thought that binding of calcium to the chelating agent may result in the release of calcium ions from casein micelles. This release of calcium ions from casein micelles results in an alteration of micel structure: the micel volume increases, resulting in an increase of viscosity. Furthermore, precipitation of calcium salts, e.g. in the form of calcium citrate, should be prevented as this may result in less desirable organoleptic properties of the nutritional composition. The optimum amount of chelating agent will depend on, *inter alia,* the pH of the nutritional composition, the amount of micellar casein present in the nutritional composition, the source of the micellar casein (e.g. MCI, MPC or MPI), the amount and type of hydrolysed whey protein present in the composition and the presence of any additional optional components.

### Additional ingredients

The nutritional composition according to the invention optionally comprises one or more additional ingredients selected from the group consisting of non-digestible carbohydrates, vitamins and related nutrients, and minerals.

The nutritional composition may comprise non-digestible carbohydrates. Non-digestible carbohydrates, also referred to as dietary fibers or as non-digestible oligosaccharides, are known in the art and are described in more detail in e.g. WO 2013/025104, WO 2014/099795 and WO 2009/072885, and in e.g. review articles Mussatto et al., "Non-digestible oligosaccharides: a review", Carbohydrate Polymers 2007, 68, 587-597 and van Loo et al., "Functional food properties of non-digestible oligosaccharides: a consensus report from the ENDO project (DGXII AIRII-CT94-1095) ", British Journal of Nutrition(1999),81, 121-132.

Non-limiting examples of non-digestible carbohydrate include fructo-oligosaccharide (FOS), galacto-oligosaccharide (GOS), trans-galacto-oligosaccharide (TOS), xylo-oligosaccharide (XOS), soy oligosaccharides, etc, preferably having a degree of polymerisation in the range of 2 to 20, more preferably in the range of 2 to 10.

The nutritional composition may comprise one or more vitamins or related nutrients. Non-limiting examples of vitamins and related nutrients include vitamin A, vitamin D, vitamin E, vitamin K, thiamine, riboflavin, pyridoxine, vitamin B12, niacin, folic acid, pantothenic acid, biotin, vitamin C, choline, carnitine, inositol, salts and derivatives thereof, and combinations thereof.

The nutritional composition may further comprise one or more minerals, non-limiting examples of which include calcium, phosphorus, magnesium, iron, zinc, chromium, manganese, molybdenum, selenium, copper, iodine, sodium, potassium, chloride, and combinations thereof.

The nutritional composition may further comprise one or more ingredients such as for example preservatives, antioxidants, emulsifying agents, buffers, colorants, flavors, etc. Examples of stabilizers include carrageenan and carboxymethyl cellulose (CMC).

### Viscosity

It has been found that the liquid nutritional composition according to the invention has a surprisingly low viscosity, even after heat-treatment.

In general, increasing the amount of protein in a liquid nutritional composition results in an increased viscosity of the composition. The increase in viscosity may even be larger when the composition comprises additional components, in particular fat and carbohydrate. As described in more detail above, too high a viscosity may result in problems consuming or administering the liquid composition. Furthermore, liquid nutritional compositions having a high content of proteins typically have a decreased heat-stability.

The present invention provides a liquid nutritional composition comprising a relatively high amount of protein and having a relatively high caloric density, and having a viscosity that is acceptable for enteral administration, including by tube feeding.

Preferably the composition according to the invention has a viscosity of 150 mPa s or lower, at 20°C and at a shear rate of 100 s⁻¹. It is further preferred that the composition has a viscosity of 120 mPa s or lower, more preferably of 100 mPa s or lower, even more preferably of 80 mPa s or lower and most preferably of 60 mPa s or lower, all at 20°C and at a shear rate of 100 s⁻¹. Furthermore, the viscosity of the composition is preferably 1 mPa s or higher, more preferably 5 mPa s or higher, both at a shear rate of 100 s⁻¹. Methods to determine the viscosity of nutritional compositions are known to the person skilled in the art. The viscosity of the nutritional composition according to the invention may suitably be determined by using a rotational viscometer using a cup and bob geometry.

The nutritional composition preferably has a pH in the range of 6 to 8, more preferably in the range of 6.2 to 7.5 and most preferably in the range of 6.4 to 7.2.

If necessary, the pH may be adjusted by the addition of acid or base. Methods to adjust the pH of a nutritional composition are known in the art. For an increase in pH e.g. NaOH or KOH may be used. Alternatively, if the pH needs to be lowered, pH adjustment may take place with a food grade acid e.g. citric acid, lactic acid, phosphoric acid, etc.

The liquid nutritional composition according to the invention has several advantages. Firstly, the presence of a protein fraction comprising at least 50 wt.% of micellar casein and at least 10 wt.% of hydrolysed whey protein, enables the liquid nutritional composition to have a relatively high protein content, such as a protein content of 8 to 20 g per 100 ml of the composition, whereas the composition still has a low viscosity. Furthermore, the composition is able to withstand high temperature treatment such as pasteurisation, sterilisation or UHT.

In addition, the composition has a good shelf-stability. In general, the viscosity of a liquid composition comprising a relatively high amount of casein, or a combination of micellar casein and caseinate, increases over time. Surprisingly, this increase in viscosity over time is less significant in the liquid nutritional composition according to the invention comprising a combination of micellar casein and whey protein hydrolysate, in particular at lower temperature, e.g. 5°C.

As is known in the art, the presence of hydrolysed protein in a nutritional composition generally results in a rather bad taste of the composition. However, in spite of the presence of hydrolysed whey protein, the liquid nutritional composition according to the invention still has a good taste.

### Protein composition

The invention also relates to a composition comprising at least 80 wt.% of protein, based on dry matter of the total composition, wherein at least 50 wt.% of the protein is micellar casein and at least 10 wt.% of the protein is hydrolysed whey protein, based on dry matter of the protein. This composition is herein also referred to as a protein composition.

It is particularly preferred that the protein composition is of a food-grade quality, i.e. suitable for consumption by a mammal, in particular by a human. The invention therefore also relates to a protein composition for use in the manufacture of a nutritional composition, the protein composition comprising at least 80 wt.% of protein, based on dry matter of the total composition, wherein at least 50 wt.% of the protein is micellar casein and at least 10 wt.% of the protein is hydrolysed whey protein, based on dry matter of the protein.

In particular, the invention relates to a protein composition for use in the manufacture of a liquid nutritional composition according to the invention, the protein composition comprising at least 80 wt.% of protein, based on dry matter of the total composition, wherein at least 50 wt.% of the protein is micellar casein and at least 10 wt.% of the protein is hydrolysed whey protein, based on dry matter of the protein. The liquid nutritional composition according to the invention is described in detail above.

Preferably, the protein composition comprises at least 85 wt.%, at least 90 wt.% or at least at least 95 wt.% of protein, based on dry matter of the total composition.

In a preferred embodiment of the protein composition according to the invention, at least 50 wt.% of the protein is micellar casein and/or at least 15 wt.% of the protein is hydrolysed whey protein, based on protein dry matter.

In a particular embodiment of the protein composition, the ratio of micellar casein to hydrolysed whey protein is in the range of 1:1 to 9:1. The invention therefore also relates to a protein composition comprising at least 80 wt.% of protein, based on dry matter of the total composition, wherein at least 50 wt.% of the protein is micellar casein and at least 10 wt.% of the protein is hydrolysed whey protein, based on dry matter of the protein, and wherein the ratio of micellar casein to hydrolysed whey protein is in the range of 1:1 to 9:1.

In this embodiment, the ratio of micellar casein to hydrolysed whey protein is for example in the range of 1:1 to 8:1, or 1:1 to 7:1, or 1:1 to 6:1, or 1:1 to 5:1, or 1:1 to 4:1, or 1:1 to 3:1, or 1:1 to 2:1. Preferably the ratio of micellar casein to hydrolysed whey protein is in the range of 1.3:1 to 9:1, more preferably in the range of 1.5:1 to 9:1, even more preferably in the range of 1.6:1 to 9:1. In this embodiment it is further preferred that the ratio of micellar casein to hydrolysed whey protein is in the range of 1.6:1 to 9:1, for example in the range of 1.6:1 to 8:1, or 1.6:1 to 7:1, or 1.6:1 to 6:1, or 1.6:1 to 5:1, or 1.6:1 to 4:1, or 1.6:1 to 3:1, or 1.6:1 to 2.5:1, or 1.6:1 to 2:1. The invention therefore also relates to a protein composition comprising at least 80 wt.% of protein, based on dry matter of the total composition, wherein at least 50 wt.% of the protein is micellar casein and at least 10 wt.% of the protein is hydrolysed whey protein, based on dry matter of the protein, and wherein the ratio of micellar casein to hydrolysed whey protein is in the range of 1.6:1 to 9:1. More preferably, the ratio of micellar casein to hydrolysed whey protein is in the range of for example 1.6:1 to 8:1, or 1.6:1 to 7:1, or 1.6:1 to 6:1, or 1.6:1 to 5:1, or 1.6:1 to 4:1, or 1.6:1 to 3:1, or 1.6:1 to 2.5:1, or 1.6:1 to 2:1.

Micellar casein and hydrolysed whey protein, and suitable sources thereof, are described in more detail above.

The hydrolysed whey protein has a degree of hydrolysation of 1-25%. Preferably, the degree of hydrolysation is 1.5-25%, more preferably 2-25%, and even more preferably 3-25%. It is particularly preferred that the degree of hydrolysation of the whey protein is in the range of 5 to 25%. As described above, the degree of hydrolysation as used herein is corrected for the natural degree of hydrolysation of the whey protein source, i.e. the whey protein that was used for the preparation of the hydrolysed whey protein.

In another particular embodiment of the protein composition, the hydrolysed whey protein comprises 40 wt.% or less intact protein, preferably 30 wt.% or less intact protein, more preferably 20 wt.% or less intact protein, yet even more preferably 10 wt.% or less intact protein, based on total protein in the hydrolysed whey protein.

In another particular embodiment of the protein composition, the hydrolysed whey protein comprises 5 wt.% or less intact protein, preferably 3 wt.% or less and more preferably 1 wt.% or less intact protein, based on total protein in the hydrolysed whey protein. In this embodiment it is most preferred that the hydrolysed whey protein comprises no intact protein. Intact protein may be removed from hydrolysed whey protein by a filtration process, as is known in the art.

In another particular embodiment of the protein composition, the hydrolysed whey protein is a hydrolysed whey protein obtainable by a hydrolysis process wherein β-lactoglobulin is hydrolysed preferentially. In this embodiment the hydrolysed whey protein comprises 20 wt.% or less intact β-lactoglobulin, preferably 15 wt.% or less, more preferably 10 wt.% or less and most preferably 5 wt.% or less, based on total protein in the hydrolysed whey protein. In this embodiment it is further preferred that the hydrolysed whey protein comprises 3 wt.% or more, preferably 5 wt.% or more of intact α-lactalbumin, based on total protein in the hydrolysed whey protein.

As described above, at least 50 wt.% of the protein in the protein composition is micellar casein. In a preferred embodiment at least 55 wt.%, and most preferably at least 60 wt.% of the protein is micellar casein. In other words, the protein fraction of the protein composition comprises 50 wt.% or more, even more preferably 55 wt.% or more, and most preferably 60 wt.% or more of micellar casein, based on the total weight of the protein fraction.

It is further preferred that 90 wt.% or less of the protein is micellar casein, more preferably 85 wt.% or less, for example 80 wt.% or less, 75 wt.% or less or 70 wt.% or less. In other words, it is preferred that the protein fraction of the protein composition comprises 90 wt.% or less, preferably 85 wt.% or less, for example 80 wt.% or less, 75 wt.% or less or 70 wt.% or less of micellar casein, based on the total weight of the protein fraction.

At least 10 wt.% of the protein in the protein composition according to the invention is hydrolysed whey protein. Preferably, at least 15 wt.% and more preferably more than 15 wt.%, e.g. 15.5 or 16 wt.% of the protein is hydrolysed whey protein. In a further preferred embodiment at least 20 wt.%, more preferably at least 25 wt.% and most preferably at least 30 wt.% of the protein is hydrolysed whey protein. In other words, the protein fraction of the protein composition comprises 10 wt.% or more of hydrolysed whey protein, based on the total weight of the protein fraction, preferably 15 wt.% or more and more preferably more than 15 wt.%, e.g. 15.5 or 16 wt.% of hydrolysed whey protein, based on the total weight of the protein fraction. More preferably the protein fraction of the protein composition comprises 20 wt.% or more of hydrolysed whey protein, based on the total weight of the protein fraction, e.g. 25 wt.% or more or 30 wt.% or more.

It is further preferred that 50 wt.% or less, preferably less than 50 wt.%, of the protein is hydrolysed whey protein, e.g. 45 wt.% or less or 40 wt.% or less.

In the protein composition according to the invention, the micellar casein and hydrolysed whey protein together constitute at least 60 wt.% of the protein, based on total weight of protein. It is further preferred that the micellar casein and hydrolysed whey protein together constitute at least 65 wt.%, at least 70 wt.%, at least 75 wt.%, at least 80 wt.%, at least 85 wt.%, at least 90 wt.% or at least 95 wt.%, based on total weight of protein.

In a particular embodiment of the protein composition, the protein composition comprises at least 80 wt.%, more preferably 85 wt.% of protein, based on dry matter of the total composition, wherein at least 60 wt.% of the protein is micellar casein and at least 10 wt.% of the protein is hydrolysed whey protein. Preferably at least 15 wt.%, more preferably at least 20 wt.% and most preferably at least 25 wt.% of the protein is hydrolysed whey protein. More preferably, at least 65 wt.% of the protein is micellar casein and at least 10 wt.%, preferably at least 15 wt.%, more preferably at least 20 wt.% and most preferably at least 25 wt.%, of the protein is hydrolysed whey protein.

In this embodiment it is further preferred that the protein composition comprises 60-90 wt.% micellar casein and 10-40 wt.% hydrolysed whey protein, based on total protein. More preferably, the protein composition comprises 60-80 wt.% micellar casein and 20-40 wt.% hydrolysed whey protein, more preferably 60-75 wt.% micellar casein and 25-40 wt.% hydrolysed whey protein, and most preferably 65-75 wt.% micellar casein and 25-35 wt.% hydrolysed whey protein, all based on total protein.

In this embodiment it is further preferred that the micellar casein and hydrolysed whey protein together constitute at least 70 wt.% of the protein, based on total protein, more preferably at least 75, even more preferably at least 80 wt.%, yet even more preferably at least 85 wt.%, yet even more preferably at least 90 wt.% and most preferably at least 95 wt.% of the protein, all based on total protein.

The invention also relates to the use of the protein composition as described above in the manufacturing of a nutritional composition according to the invention. Said nutritional composition, and preferred embodiments thereof, is described in more detail above.

In addition to micellar casein and hydrolysed whey protein, the protein fraction of the protein composition according to the invention may comprise one or more additional proteins. The additional protein may e.g. be selected from the group consisting of intact whey protein, intact or hydrolysed caseinate, intact or hydrolysed plant protein, intact or hydrolysed algal protein and hydrolysed collagen.

Preferably, the one or more additional proteins, if present, are selected from the group consisting of intact or hydrolysed caseinate, intact or hydrolysed plant protein, intact or hydrolysed algal protein and hydrolysed collagen.

More preferably, the one or more additional proteins, if present, are selected from the group consisting of intact or hydrolysed sodium caseinate, calcium caseinate, potassium caseinate, magnesium caseinate, soy protein, canola protein, rapeseed protein, wheat protein, rice protein, quinoa protein, pea protein, hydrolysed collagen and hydrolysed gelatin, and more preferably from the group consisting of intact or hydrolysed calcium caseinate, potassium caseinate, sodium caseinate, magnesium caseinate, soy protein, canola or rapeseed protein, wheat protein, rice protein, quinoa protein, pea protein and hydrolysed collagen.

The one or more additional proteins, if present, constitute 40 wt.% or less, 35 wt.% or less, 30 wt.% or less, 25 wt.% or less, 20 wt.% or less, 15 wt.% or less, 10 wt.% or less or 5 wt.% or less, based on total weight of protein in the protein composition.

The protein composition according to the invention comprises at least 80 wt.% of protein, based on dry matter of the total composition. Additional ingredients that may be present in the protein composition include ingredients that may be present in the source of micellar protein and/or the source of hydrolysed whey protein. Examples include lactose, non-protein nitrogen compounds (also referred to as NPN) such as ureum, vitamins, minerals, fat, etc.

For example when the source of hydrolysed whey protein used in the manufacture of the protein composition comprises lactose, the protein composition itself may also comprise lactose.

The protein composition according to the invention may be in the form of a liquid product, preferably an aqueous liquid product, for example in the form of a suspension or a slurry, an emulsion, a solution, a paste or a gel.

However, it is preferred that the protein composition is in a solid form, preferably in the form of a particulate product, for example in the form of a powder, preferably a flowable powder. This embodiment includes e.g. a spray dried, an agglomerated or dry mixed particulate product, and a product in e.g. tablet form. In this embodiment it is further preferred that the protein composition has a moisture content of 10 wt.% or less, preferably of 8 wt.% or less, more preferably of 5 wt.% or less and most preferably of 4 wt.% or less, based on the total weight of the composition.

The present invention further relates to the use of the protein composition according to the invention for the manufacture of a nutritional composition. In a preferred embodiment, the invention relates to the use of the protein composition according to the invention for the manufacture of a liquid nutritional composition. More in particular, the invention relates to the use of the protein composition according to the invention for the manufacture of a liquid nutritional composition according to the present invention. The invention thus relates to the use of the protein composition according to the invention for the manufacture of a liquid nutritional composition (preferably a heat-treated liquid nutritional composition) comprising 8 - 20 g of protein per 100 ml of the composition, wherein at least 50 wt.% of the protein is micellar casein and at least 10 wt.% of the protein is hydrolysed whey protein.

This liquid nutritional composition, and preferred embodiments thereof, are described in detail above.

### Method for the manufacture of the nutritional composition

The present invention also relates to a method for the manufacture of the nutritional composition according to the invention. The nutritional composition and preferred embodiments thereof are described in detail above.

The nutritional composition according to the invention is manufactured by techniques that are known in the art and commonly used for the manufacturing of liquid nutritional compositions.

In a first embodiment, the method for the manufacture of the nutritional composition according to the invention comprises:
(a) providing a composition comprising water and the protein composition according to the invention, and optionally further comprising carbohydrate, fat, vitamins and/or minerals; and
(b) subjecting the obtained composition to a heat-treatment.

In this embodiment it is preferred that the method for the manufacture of the nutritional composition according to the invention comprises:
(a) providing a composition comprising water, the protein composition according to the invention, carbohydrate and fat, and optionally further comprising vitamins and/or minerals; and
(b) subjecting the obtained composition to a heat-treatment.

The composition of step (a) may be provided in several ways, which will be known to a person skilled in the art. For example, when the protein composition according to the invention is in the form of a particulate product, said protein composition may be dry blended with one or more sources of carbohydrate. Subsequent addition of the dry mixture to water provides a solution of protein and carbohydrate in water. Alternatively, a solution of the protein composition in water is prepared, followed by addition of the carbohydrate source(s). Optionally a solution of minerals in water is added. The one or more fat sources are preferably added to the solution at an increased temperature, e.g. at a temperature in the range of 40-80°C, preferably in the range of 50-70°C and most preferably at a temperature of about 60°C. An emulsifier, if present, may be added together with the fat (this is particularly preferred if the emulsifier is fat-soluble), or separately.

The composition of step (a) may also be provided by combining an aqueous stream comprising the protein composition according to the invention, an aqueous stream of one or more carbohydrate sources, a liquid stream of one or more fat sources and optionally a mineral solution. Also a combination of dry blending and mixing of liquid (aqueous) streams of the various components may be applied.

If necessary, the pH of the composition obtained in step (a) is adjusted to a value in the range of 6 to 8, preferably in the range of 6.2 to 7.5, more preferably in the range of 6.4 to 7.2. Even more preferably the pH is adjusted to a value in the range of 6.8 to 7.0, and most preferably to a value of 6.9. The pH may be adjusted with e.g. NaOH or KOH, if an increase in pH is needed. Alternatively, if the pH needs to be lowered, pH adjustment may take place with a food grade acid e.g. citric acid, lactic acid, phosphoric acid, etc.

Before being subjected to the heat-treatment of step (b), the obtained composition may be subjected to a pre-heating step and/or a homogenisation step. In particular when the nutritional composition comprises a fat, it is preferred that a homogenisation step is performed. A pre-heating step typically takes place at a temperature in the range of 70 to 95°C. The pre-heating step may include a holding time, typically of a few minutes. The homogenisation step may comprise 2 stages. A homogenisation step typically takes place at a pressure in the range of from 200 to 500 bar for the first stage, and 20-50 bar for the second stage (if present).

In step (b) of the process, the composition obtained in step (a) is subjected to a heat-treatment. Long-shelf life ambient stable products may either be sterilised by retort sterilisation (e.g. 10 min at 121°C, although different time and temperature combinations are also possible) or UHT sterilisation (e.g. 4 sec at 142°C, or 35 sec at 136 °C, or 5 min at 124°C). When a shorter shelf-life of the liquid nutritional composition would be acceptable, the composition may be subjected to pasteurisation (e.g. 1 min at 80°C, or 30 sec 95°C). These products are preferably stored at low temperature (e.g. 5°C).

Optionally the composition obtained in step (b) is subjected to a homogenisation step, typically at a pressure in the range of from 200 to 500 bar for the first stage, and (if present) 20-50 bar for the second stage, in order to disrupt any aggregates that may have formed during the heat-treatment in step (b).

The liquid nutritional composition according to the invention may for example be prepared by preparing a solution of the protein according to the invention in water (preferably demineralised water), addition of a mineral solution to the protein solution (optional), followed by warming the mixture to a temperature in the range 40-80°C, preferably in the range of 50-70°C and most preferably at a temperature of about 60°C. Optionally, one or more sources of fat are added and the mixture is optionally homogenised. The liquid fat stream is optionally pre-heated to a temperature of about 50-70°C, e.g. 60°). After addition of the fat the mixture is cooled, preferably to ambient temperature (about 20°) and the pH is adjusted if necessary. The mixture is then subjected to a homogenisation step, preferably a 2-stage homogenisation step. The thus obtained nutritional composition is then sterilised, e.g. 10 min at 121°C.

### Method for the manufacture of the protein composition

The invention further relates to a method for the manufacture of the protein composition according to the invention. The protein composition and preferred embodiments thereof are described in detail above.

The protein composition according to the invention is manufactured by techniques that are known in the art and commonly used for the manufacturing of similar products, wherein the product is in the form of a liquid or of a particulate product.

In a first embodiment, the method for the manufacture of the protein composition according to the invention comprises:
(i) providing a composition comprising micellar casein and water;
(ii) providing a composition comprising hydrolysed whey protein and water; and
(iii) wet-mixing the mixture of step (i) and the mixture of step (ii).

In this embodiment it is further preferred that the mixture obtained in step (iii) is dried, in order to obtain the protein composition according to the invention in the form of a particulate product. Therefore, the process preferably comprises:
(i) providing a composition comprising micellar casein and water;
(ii) providing a composition comprising hydrolysed whey protein and water;
(iii) wet-mixing the mixture of step (i) and the mixture of step (ii); and
(iv) drying the mixture of step (iii) in order to obtain the protein composition in the form of a particulate product.

In a second embodiment, the method for the manufacture of the protein composition according to the invention comprises:
(i) providing a composition comprising micellar casein in the form of a particulate product;
(ii) providing a composition comprising hydrolysed whey protein in the form of a particulate product; and
(iii) dry blending the mixture of step (i) and the mixture of step (ii).

As will be appreciated by a person skilled in the art, the protein composition according to the invention may also be prepared by a combination of the methods described above. For example a liquid hydrolysed whey protein hydrolysate may be provided by subjecting e.g. liquid whey protein concentrate (WPC) to hydrolysis, for example by incubating the WPC with a suitable enzyme, followed by inactivation of the enzyme by e.g. pasteurization. Micellar casein in the form of a particulate product may then be added to the liquid stream comprising the hydrolysed whey protein. Alternatively, the whey protein hydrolysate may be dried, e.g. by spray-drying, to obtain hydrolysed whey protein in the form of a particulate product. Said particulate product may be added to a wet stream comprising micellar casein.

### Examples

### Example 1: Preparation of a liquid nutritional composition

Several liquid nutritional compositions were prepared, comprising the ingredients shown in Table 1.

**Table 1: Ingredients present in liquid nutritional composition**

| **Component** | **Source** | **Amount (g/100ml)** |
|---|---|---|
| Protein | See tables 2 and 3 | 10-15 |
| Fat | Vegetable oil blend | 5.3 |
| Carbohydrate | Sucrose | 7.8 |
| | Maltodextrin 170 | 7.8 |
| | | Total: 15.6 |
| Emulsifier | Lecithin | 0.4 |
| Heat stabilizer | Citrate | See tables 2 and 3 |

Liquid nutritional compositions 1-7 according to the invention, as shown in Table 2, and comparative compositions 8 - 12, as shown in Table 3, were prepared.

**Table 2: Liquid nutritional composition according to the invention, having a protein content in the range of 10 to 15 g per 100 ml of the composition.**

| **Composition No.** | **Micellar casein (wt.% protein d.m.)^{a}** | **Hydrolysed whey protein (wt.% protein d.m.)^{a}** | **Citrate (g/l)** |
|---|---|---|---|
| **1^{e}** | 69 (Refit MCI 88) ^{b} | 25 (Hyvital Whey ETD 110) ^{c} | 3 |
| **2^{e}** | 60 (Refit MCI 88) | 37 (Hyvital Whey ETD 110) | 3 |
| **3^{e}** | 69 (Refit MCI 88) | 25 (Hyvital Whey 8016) ^{d} | 3 |
| **4^{e}** | 60 (Refit MCI88) | 37 (Hyvital Whey 8016) | 3 |
| **5^{e}** | 84 (Refit MCI88) | 12 (Hyvital Whey 8016) | 3 |
| **6^{f}** | 69 (Refit MCI88) | 25 (Hyvital Whey 8016) | 3,8 |
| **7^{g}** | 69 (Refit MCI88) | 25 (Hyvital Whey 8016) | 4,5 |

| | | | |
|---|---|---|---|
| a The amounts of micellar casein and hydrolysed whey proteins are expressed in wt.%, based on protein total dry matter. The source of micellar casein and hydrolysed whey proteins is shown in parentheses. b Refit MCI 88 is a source of micellar casein, comprising 88 wt.% of protein, based on total dry matter, and about 90-95 wt.% of micellar protein, based on protein dry matter. c Hyvital Whey ETD 110 is a predigested protein having a 92% pre-digested β-lactoglobulin content. The protein content of Hyvital Whey ETD 110 is about 44 wt.%, based on total dry matter. Hyvital Whey ETD 110 comprises about 45 wt.% of lactose, based on total dry matter. d Hyvital Whey 8016 is a pre-digested protein from fresh milk whey, having a protein content of about 80 wt.% based on total dry matter. Hyvital Whey 8016 has a degree of hydrolysis in the range of 7.5-9.5. e This composition comprises 10 g protein per 100 ml of the composition. f This composition comprises 12.5 g protein per 100 ml of the composition. g This composition comprises 15 g protein per 100 ml of the composition | | | |

**Table 3: Comparative examples of a nutritional composition, all having a protein content of 10 g per 100 ml of the composition.**

| **Composition No.** | **Micellar casein (wt.% protein d.m.)^{a}** | **Caseinate (wt.% protein d.m.)^{a}** | **Citrate (g/l)** |
|---|---|---|---|
| **8 (comparative)** | 69 (Refit MCI 88) | 25 (hydrolysed sodium caseinate) ^{b} | 1 |
| **9 (comparative)** | 60 (Refit MCI 88) | 37 (hydrolysed sodium caseinate) | 1 |
| **10 (comparative)** | 69 (Refit MCI 88) | 25 (hydrolysed sodium caseinate) ^{c} | 1 |
| **11 (comparative)** | 60 (Refit MCI 88) | 37 (intact sodium caseinate) ^{d} | 1 |
| **12 (comparative)** | 69 (Refit MCI 88) | 25 (intact sodium caseinate) ^{d} | 3 |

| | | | |
|---|---|---|---|
| a The amounts of micellar casein and caseinate are expressed in wt.%, based on protein total dry matter. The source of micellar casein and caseinate is shown in parentheses. b Slightly hydrolysed sodium caseinate, Tatua 107 c Hydrolysed sodium caseinate , Excellion EM 20 d Excellion sodium caseinate S | | | |

Compositions 1-7 and 8-12 were prepared on a 2-liter scale and the heat-stability was tested. Compositions 1-7 and 8-12 were heat stable. Heat stability was analysed by visual observation, and a heat-stable solution was homogenous, and showed no stability defects like aggregates, lumps and/or gelation. Homogenization was performed in a Homogenizer Bosch with a flow rate of 60 1/h at 70°C and at a pressure of 200/50 bar. The compositions were subjected to UHT treatment.
Subsequently, the compositions were prepared on an 8 liter scale, packaged into bottles and stored at 5°C, 20°C and 30°C separately. Before they were packaged into bottles the compositions were subjected to UHT treatment.

The heat stability of small-scale samples was tested by retort sterilization (Zirbus LTA500 rotating autoclave, conditions 8 min at 121°C). UHT treatment was performed with a OMVE HT220 (20 1/hr) equipped with a GEA homogenizer HP202, via the following process: pre-heat at 70°C, upstream homogenization at a pressure of 200/50 bar, UHT 5 min at 124°C, downstream homogenization at 100/25 bar.

### Viscosity measurements

The viscosity of liquid nutritional compositions after heat-treatment was determined with a rotational viscometer using a cup and bob geometry. The viscosity was measured with an Anton Paar MCR302 Rheometer with a CC-27, at 5°C and 20°C after storage for one day, and at a shear rate of 10 s⁻¹, 100 s⁻¹ and 1000 s⁻¹.

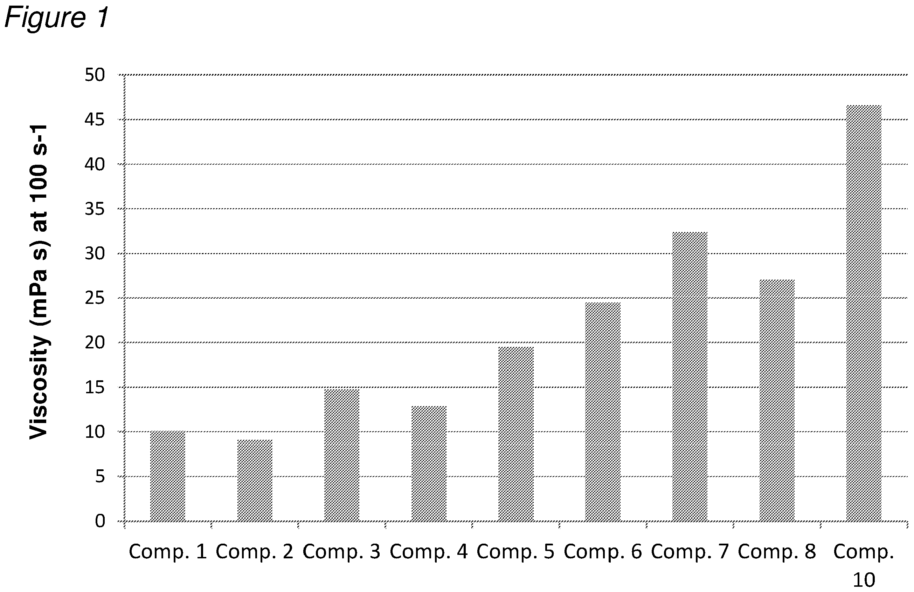

The viscosity of compositions according to the invention 1-7, and of comparative compositions 8 and 10, all at a shear rate of 100 s⁻¹ is shown in Figure 1. The viscosity was measured at 20°C.

From Figure 1 it can be seen that the viscosity of the nutritional compositions according to the invention is sufficiently low. In fact, the viscosity of nutritional compositions according to the invention 1-6 is even lower than that of comparative compositions 8 and 10. The viscosity of composition 7 according to the invention is slightly higher than that of comparative composition 8. However, comparative composition 8 has a protein content of 10 g per 100 ml composition, whereas the composition 7 according to the invention has a much higher protein content of 15 g per 100 ml of the composition. Composition 7 still has a viscosity that is sufficiently low to be applied as a sip feed, or a tube feed.

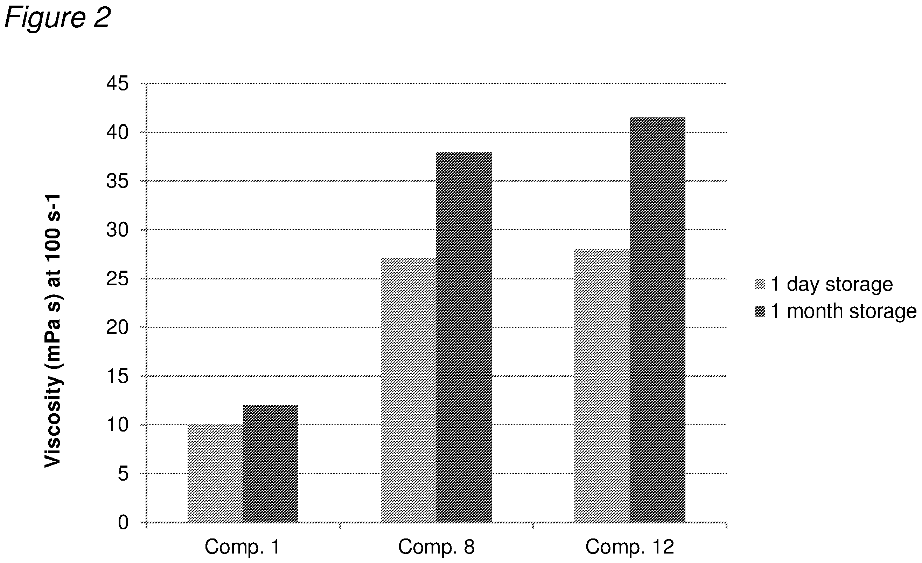

Composition 1 according to the invention and comparative compositions 8 and 12 were stored for 1 month at 5°C and at 20°C, and their viscosities were measured after 1 day and after 1 month, at a shear rate of 100 s⁻¹. The viscosities were measured at 5°C for the samples stored at 5°C, and at 20°C for the samples stored at 20°C. The viscosities at 20°C are shown in Figure 2. From Figure 2 it can be seen that the viscosity after one month has increased significantly in comparative compositions 8 and 12, whereas only a slight increase in viscosity was observed for composition 1 according to the invention.

### Taste

The taste of the compositions according to the invention was tested by a test panel and compared to the taste of a comparative composition comprising caseinate. The compositions were served blind, and at ambient temperature. The panel rated the sweetness, thickness, bitterness and general acceptability of the compositions. The test panel was of the opinion that comparative compositions comprising (modified) caseinates displayed a higher stickiness in their mouthfeel as compared to compositions according to the invention, comprising hydrolysed whey proteins. These results are consistent with the viscosity measurements. Surprisingly, no apparent bitterness was perceived in the compositions according to the invention, nor were there any other typical hydrolysate off-flavours perceived. In conclusion, compositions according to the invention, comprising hydrolyzed whey protein, have favourable sensorial properties.

### Example 2: Liquid nutritional composition

The liquid nutritional composition according to the invention is prepared by preparing a solution of the protein in demineralised water, addition of a carbohydrate source, addition of a mineral solution to the protein solution (optional), followed by warming the mixture to a temperature in the range 40-80°C, preferably in the range of 50-70°C and most preferably at a temperature of about 60°C. Optionally, one or more sources of fat are added and the mixture is optionally homogenised. The liquid fat stream is optionally pre-heated to a temperature of about 50-70°C, e.g. 60°). After addition of the fat the mixture is cooled, preferably to ambient temperature (about 20°) and the pH is adjusted if necessary. The mixture is then subjected to a homogenisation step, preferably a 2-stage homogenisation step. The thus obtained nutritional composition is then sterilised, e.g. 10 min at 121°C.

An example of a nutritional composition according to the invention is shown in Table 4.

**Table 4: Liquid nutritional composition according to the invention**

| | **Unit** | **Per 100 ml** | **Energy% (En%)** |
|---|---|---|---|
| Energy (kJ) | KJ | 631 | |
| Energy (Kcal ) | Kcal | 150 | |
| Protein | g | 12,5 | 33,3 |
| micellar casein | % | 68,0 | |
| whey protein hydrolysate | % | 26,0 | |
| intact whey | % | 6,0 | |
| Fat | g | 5,3 | 31,8 |
| Carbohydrates | g | 13,1 | 34,9 |
| Fibres | g | 0,0 | 0,0 |
| Sodium (Na) | mg | 136 | |
| Calcium (Ca) | mg | 254 | |
| Phosphor (P) | mg | 160 | |
| Magnesium (Mg) | mg | 36 | |
| Potassium (K) | mg | 379 | |
| Chloride (Cl) | mg | 81 | |

The recipe for the preparation of this liquid nutritional composition is shown in Table 5.

**Table 5: Ingredients present in 1 liter liquid nutritional composition of Table 4.**

| **Ingredient** | **gram** | **Type** |
|---|---|---|
| Refit MCI 88 | 109,6 | Micellar casein isolate |
| Vegetable oil | 45,3 | E.g. soy oil |
| Sucrose | 78,5 | |
| Maldex 170 | 50,4 | 16 DE |
| Yellothin 100IP | 4,0 | Lecithin: emulsifier |
| K-citrate | 0,0 | chelator |
| Na-citrate | 3,8 | chelator |
| MgC12 | 1,1 | mineral enrichment |
| Hyvital Whey 8016 | 42,1 | mildly hydrolysed whey protein |

Another example of a nutritional composition according to the invention is shown in Table 6.

**Table 6: Liquid nutritional composition according to the invention**

| | **Unit** | **Per 100 ml** | **Energy% (En%)** |
|---|---|---|---|
| Energy (kJ) | KJ | 840 | |
| Energy (Kcal ) | Kcal | 200 | |
| Protein | g | 10,0 | 20,0 |
| micellar casein | % | 69 | |
| whey protein hydrolysate | % | 25 | |
| intact whey | % | 6 | |
| Fat | g | 7,5 | 33,8 |
| Carbohydrates | g | 23,1 | 46,3 |
| Fibres | g | 0,0 | 0,0 |
| Sodium (Na) | mg | 77 | |
| Calcium (Ca) | mg | 210 | |
| Phosphor (P) | mg | 146 | |
| Magnesium (Mg) | mg | 32 | |
| Potassium (K) | mg | 180 | |
| Chloride (Cl) | mg | 132 | |

The recipe for the preparation of this liquid nutritional composition is shown in Table 7.

**Table 7: Ingredients present in 1 liter liquid nutritional composition of Table 6.**

| **Ingredient** | **gram** | **Type** |
|---|---|---|
| Refit MCI 88 | 89,2 | Micellar casein isolate |
| Vegetable oil | 67,6 | E.g. soy oil |
| Sucrose | 82,6 | |
| Maldex 170 | 125,0 | 16 DE |
| Yellothin 100IP | 4,0 | Lecithin: emulsifier |
| K-citrate | 2,0 | chelator |
| Na-citrate | 1,0 | chelator |
| MgC12 | 1,1 | mineral enrichment |
| Hyvital Whey EtD 110 | 56,8 | sligthly hydrolysed whey protein |

### Example 3: Liquid nutritional compositions 14 -15 and comparative composition 13

Liquid nutritional compositions **13** (comparable example) and **14-15** were prepared from the ingredients shown in Table 8 and having the nutritional compositions as shown in Table 9.

Comparative composition **13** did not comprise hydrolysed whey protein, and the composition comprised solely micellar casein as protein. Compositions **14** and **15,** both according to the invention, comprised 85 wt.% (composition **14**) and 70 wt.% (composition **15**) micellar casein, based on total protein.

Compositions 13-15 were prepared on a 2-liter scale. Homogenization was performed in a Homogenizer Bosch with a flow rate of 60 1/h at 70°C and at a pressure of 200/50 bar. The heat-stability was tested in a retort test. Compositions 13-15 were heat stable. Heat stability was analysed by visual observation, and a heat-stable solution was homogenous, and showed no stability defects like aggregates, lumps and/or gelation. When sufficiently heat stable, the compositions were subjected to UHT treatment. Subsequently, the compositions were packaged into bottles and stored at 5°C and at 20°C. The viscosity was measured at 5°C after 1 day and after 1 month storage at 5 °C.

Heat stability was tested by retort sterilization (Zirbus LTA500 rotating autoclave, conditions 8 min at 121°C). UHT treatment was performed with a OMVE HT220 (20 1/hr) equipped with a GEA homogenizer HP202, via the following process: pre-heat at 70°C, upstream homogenization at a pressure of 200/50 bar, UHT 5 min at 124°C, downstream homogenization at 100/25 bar.

**Table 8: Ingredients for preparation of 1 liter liquid nutritional compositions 13-15.**

| **Ingredient** | **13 (comparable example, g)** | **14 (g)** | **15 (g)** |
|---|---|---|---|
| Micellar casein (wt.% of protein) | 100 | 85 | 70 |
| Refit MCI 88 | 118,9 | 106,9 | 87,6 |
| Vegetable oil (e.g. soy oil) | 46,7 | 46,4 | 45,9 |
| Sucrose | 78,3 | 78,6 | 79,1 |
| Maltodextrin 150 | 77,0 | 77,0 | 77,0 |
| Lecithin | 4,0 | 4,0 | 4,0 |
| K citrate | 1,5 | 1,0 | 3,0 |
| Na citrate | 0,5 | 2,0 | 0,3 |
| MgCl₂ | | 0,1 | 87,6 |
| KCl | 1,6 | | |
| NaCl | 1,2 | | |
| Hyvital whey 8016 | | 13,0 | 33,7 |
| Demiwater | 758,7 | 758,9 | 757,5 |
| **Total** | **1088,5** | **1088,0** | **1088,2** |

**Table 9: Liquid nutritional compositions 14 and 15 according to the invention**

| | | **Composition 14** | | **Composition 15** | |
|---|---|---|---|---|---|
| | **Unit** | **Per 100 ml** | **Per 100 kcal** | **Per 100 ml** | **Per 100 kcal** |
| Energy (kJ) | KJ | 630 | | 631 | |
| Energy (Kcal ) | Kcal | 150 | | 150 | |
| Protein | g | 10,0 | 6,7 | 10,0 | 6,7 |
| micellar casein | % | 85 | | 70 | |
| Fat | g | 5,3 | 3,5 | 5,3 | 3,5 |
| Carbohydrates | g | 15,6 | 10,4 | 15,6 | 10,4 |
| sugars | g | 8,5 | 5,7 | 8,5 | 5,7 |
| lactose | g | 0,4 | 0,2 | 0,5 | 0,3 |
| Fibres | g | 0,0 | 0,0 | 0,0 | 0,0 |
| Sodium (Na) | mg | 76 | 50 | 109 | 73 |
| Calcium (Ca) | mg | 238 | 158 | 203 | 135 |
| Phosphor (P) | mg | 150 | 100 | 128 | 85 |
| Magnesium (Mg) | mg | 23 | 15 | 23 | 15 |
| Potassium (K) | mg | 181 | 120 | 303 | 202 |
| Chloride (Cl) | mg | 45 | 30 | 45 | 30 |

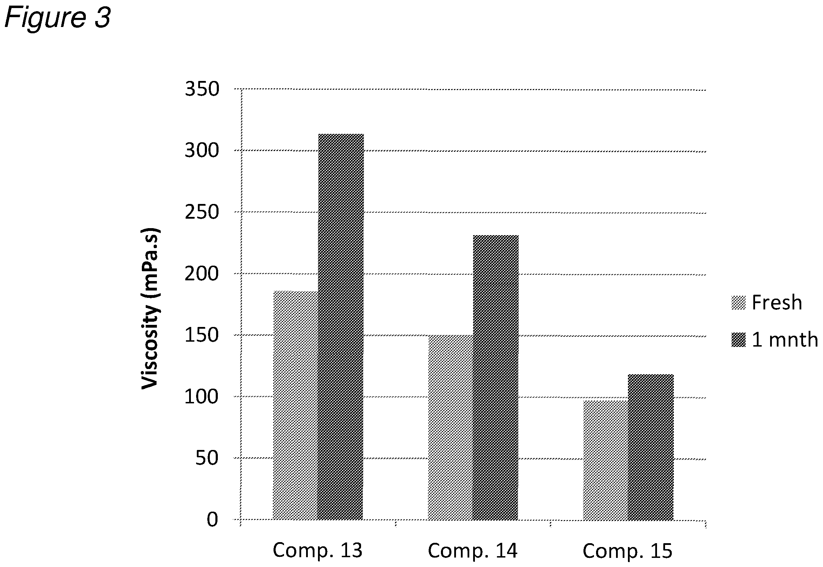

Compositions **14** and **15** according to the invention and comparative composition **13** were stored for 1 month at 5°C, and their viscosities were measured after 1 day and after 1 month storage. Viscosities were measured at a temperature of 5°C and a shear rate of 100 s⁻¹. The viscosities at 5°C are shown in Figure 3. From Figure 3 it can be seen that the viscosity after one month has increased significantly in comparative composition **13.** In compositions **14** and **15** according to the invention, and in particular in composition **15,** the viscosity has increased much less upon prolonged storage at 5°C.

### Example 4: Liquid nutritional compositions 16 and 17

Liquid nutritional composition **16** and **17** were prepared from the ingredients shown in Table 10 and having the nutritional compositions as shown in Table 11. Both compositions **16** and **17** comprised 70 wt.% micellar casein, based on total protein.

**Table 10: Ingredients for preparation of 1 liter liquid nutritional compositions 16 and 17.**

| **Ingredient** | **16 (gram)** | **17 (gram)** |
|---|---|---|
| Micellar casein (wt.% of protein) | 70 | 70 |
| Refit MCI 88 | 87,8 | |
| Refit MPC 80 | | 106,7 |
| Vegetable oil (e.g. soy oil) | 45,8 | 46,7 |
| Sucrose | 77,5 | 75,7 |
| Maltodextrin 150 | 77,0 | 77,0 |
| Lecithin | 4,0 | 4,0 |
| K citrate | 2,0 | 1,0 |
| Na citrate | 2,0 | 3,0 |
| MgCl₂ | 1,0 | 0,9 |
| Hyvital whey 8022 | 33,5 | |
| Hyvital whey 8016 | | 16,0 |
| Demiwater | 757,7 | 754,9 |
| **Total** | **1088,2** | **1086,0** |

**Table 11: Liquid nutritional compositions 16 and 17 according to the invention**

| | | **Composition 16** | | **Composition 17** | |
|---|---|---|---|---|---|
| | **Unit** | **Per 100 ml** | **Per 100 kcal** | **Per 100 ml** | **Per 100 kcal** |
| Energy (kJ) | KJ | 630 | | 632 | |
| Energy (Kcal ) | Kcal | 150 | | 150 | |
| Protein | g | 10,0 | 6,7 | 10,0 | 6,7 |
| micellar casein | % | 70,0 | | 70,0 | |
| Fat | g | 5,3 | 3,5 | 5,3 | 3,5 |
| Carbohydrates | g | 15,6 | 10,4 | 15,7 | 10,4 |
| sugars | g | 8,4 | 5,6 | 8,5 | 5,7 |
| lactose | g | 0,3 | 0,2 | 0,7 | 0,4 |
| Fibres | g | 0,0 | 0,0 | 0,0 | 0,0 |
| Sodium (Na) | mg | 78,7 | 52,4 | 102,1 | 67,9 |
| Calcium (Ca) | mg | 203,3 | 135,4 | 240,2 | 159,8 |
| Phosphor (P) | mg | 128,2 | 85,4 | 152,8 | 101,6 |
| Magnesium (Mg) | mg | 30,1 | 20,0 | 22,3 | 14,8 |
| Potassium (K) | mg | 154,4 | 102,9 | 228,3 | 151,8 |
| Chloride (Cl) | mg | 67,6 | 45,0 | 63,5 | 42,2 |

The viscosity of comparative sample MCI (micellar casein isolate) and of composition **16** was measured at 5°C and at 20°C, at 10 s⁻¹, 100 s⁻¹ and 1000 s⁻¹. The results are shown in Table 12.

**Table 12: Viscosities of compositions 16 and 17 according to the invention**

| | **Viscosity at 20°C (mPa.s)** | | | **Viscosity at 5°C (mPa.s)** | | |
|---|---|---|---|---|---|---|
| Shear rate (s⁻¹) | 10 | 100 | 1000 | 10 | 100 | 1000 |
| 100% MCI | 37 | 32 | 30 | 90 | 78 | 67 |
| **Composition 16** | 23 | 21 | 20 | 53 | 47 | 39 |
| **Composition 17** | 48 | 40 | 32 | 114 | 88 | 62 |

Composition **17** was prepared using MPC as a source of micellar casein, whereas in composition **16** MCI was the micellar casein source. From the results in Table 12 it appears that MPC based compositions have a higher viscosity than MCI based compositions. As known in the art, MPC based nutritional composition are generally higher in viscosity. By combining MPC with a whey protein hydrolysate the difference in viscosity compared to a MCI based nutritional composition was only minor.

## Claims

1. Heat-treated liquid nutritional composition comprising 8 - 20 g of protein per 100 ml of the composition, wherein at least 50 wt.% of the protein is micellar casein and at least 10 wt.% of the protein is hydrolysed whey protein, wherein the hydrolysed whey protein has a degree of hydrolysation in the range 1-25%, the degree of hydrolysation being determined by the trinitrobenzenesulphonic acid (TNBS) procedure and being corrected for the natural degree of hydrolysation of the whey protein that was used for the preparation of the hydrolysed whey protein.

2. Composition according to claim 1, wherein the composition comprises 9 - 18 g protein per 100 ml of the composition.

3. Composition according to claim 1 or claim 2, wherein at least 15 wt.% of the protein is hydrolysed whey protein.

4. Composition according to any of claims 1-3, wherein 60-90 wt.% of the protein is micellar casein and 10-40 wt.% of the protein is hydrolysed whey protein.

5. Composition according to any of claims 1-4, wherein the micellar casein and hydrolysed whey protein together constitute at least 70 wt.% of the protein, based on total protein, preferably at least 75, more preferably at least 80 wt.%, even more preferably at least 85 wt.%, yet even more preferably at least 90 wt.% and most preferably at least 95 wt.% of the protein, all based on total protein.

6. Composition according to any of claims 1-5, wherein the protein further comprises one or more proteins selected from the group consisting of intact whey protein, intact or hydrolysed caseinate, intact or hydrolysed plant protein, intact or hydrolysed algal protein and hydrolysed collagen.

7. Composition according to any of claims 1-6, wherein the viscosity of the composition is 150 mPa s or lower, at 20°C and at a shear rate of 100 s⁻¹.

8. Composition according to any of claims 1-7, wherein the composition has an energy density of 1.5 kcal/ml or higher.

9. Composition according to any of claims 1-8, wherein the composition further comprises fat and/or carbohydrate.

10. Composition according to any of claims 1-9, wherein the composition further comprises a chelating agent in an amount of 0.5-10 g/l.

11. Composition according to any of claims 1-10, wherein the pH of the composition is in the range of 6 to 8.

12. Protein composition suitable for use in the manufacture of the heat-treated liquid nutritional composition of any one of claims 1-11, said protein composition comprising at least 80 wt.% of protein, based on dry matter of the total composition, wherein at least 50 wt.% of the protein is micellar casein and at least 10 wt.%, preferably at least 15 wt.%, of the protein is hydrolysed whey protein, based on dry matter of the protein, wherein the hydrolysed whey protein has a degree of hydrolysation in the range 1-25%, the degree of hydrolysation being determined by the trinitrobenzenesulphonic acid (TNBS) procedure and being corrected for the natural degree of hydrolysation of the whey protein that was used for the preparation of the hydrolysed whey protein.

13. Protein composition according to claim 12, wherein the composition comprises at least 85 wt.% of protein based on dry matter of the composition.

14. Protein composition according to claim 12 or claim 13, wherein the protein composition comprises 60-90 wt.% micellar casein and 10-40 wt.% hydrolysed whey protein, based on total protein.

15. Protein composition according to any of claims 12-14, wherein the composition further comprises one or more proteins selected from the group consisting of intact whey protein, intact or hydrolysed caseinate, intact or hydrolysed plant protein, intact or hydrolysed algal protein and hydrolysed collagen.

16. Method for the manufacture of the protein composition according to any of claims 12-15, the method comprising:
(i) providing a composition comprising micellar casein and water;
(ii) providing a composition comprising hydrolysed whey protein and water;
(iii) wet-mixing the mixture of step (i) and the mixture of step (ii); and
(iv) optionally drying the mixture of step (iii) in order to obtain the protein composition in the form of a particulate product;
or:
(i) providing a composition comprising micellar casein in the form of a particulate product;
(ii) providing a composition comprising hydrolysed whey protein in the form of a particulate product; and
(iii) dry blending the mixture of step (i) and the mixture of step (ii).

17. Method for the manufacture of the nutritional composition according to any of claims 1-11, the method comprising:
(a) providing a composition comprising water and the protein composition according to any of claims 12-15, and optionally further comprising carbohydrate, fat, vitamins and/or minerals; and
(b) subjecting the obtained composition to a heat-treatment.

18. Use of the protein composition according to any of claims 12-15 for the manufacture of the heat treated nutritional composition of any one of claims 1-11.

## Patentansprüche

1. Wärmebehandelte flüssige Nahrungszusammensetzung, umfassend 8-20 g Protein pro 100 ml der Zusammensetzung, wobei wenigstens 50 Gew.-% des Proteins micellares Kasein sind und wenigstens 10 Gew.-% des Proteins hydrolysiertes Molkeprotein sind, wobei das hydrolysierte Molkeprotein eine Hydrolysegrad in dem Bereich von 1-25 % aufweist, wobei der Hydrolysegrad durch das Trinitrobenzolsulfonsäure(TNBS)-Verfahren bestimmt wird und auf den natürlichen Hydrolysegrad des Molkeproteins, das für die Herstellung des hydrolysierten Molekproteins verwendet worden ist, korrigiert wird.

2. Zusammensetzung gemäß Anspruch 1, wobei die Zusammensetzung 9-18 g Protein pro 100 ml der Zusammensetzung umfasst.

3. Zusammensetzung gemäß Anspruch 1 oder Anspruch 2, wobei wenigstens 15 Gew.-% des Proteins hydrolysiertes Molkeprotein sind.

4. Zusammensetzung gemäß einem der Ansprüche 1-3, wobei 60-90 % des Proteins micellares Kasein sind und 10-40 Gew.-% des Proteins hydrolysiertes Molkeprotein sind.

5. Zusammensetzung gemäß einem der Ansprüche 1-4, wobei das micellare Kasein und das hydrolysierte Molkeprotein zusammen wenigstens 70 Gew.-% des Proteins, bezogen auf das gesamte Protein, vorzugsweise wenigstens 75, bevorzugter wenigstens 80 Gew.-%, noch bevorzugter wenigstens 85 Gew.-%, sogar noch bevorzugter wenigstens 90 Gew.-% und höchst bevorzugt wenigstens 95 Gew.-% des Proteins, jeweils bezogen auf das gesamte Protein, bilden.

6. Zusammensetzung gemäß einem der Ansprüche 1-5, wobei das Protein ferner ein oder mehrere Proteine ausgewählt aus der Gruppe bestehend aus intaktem Molkeprotein, intaktem oder hydrolysiertem Kaseinat, intaktem oder hydrolysiertem Pflanzenprotein, intaktem oder hydrolysiertem Algenprotein und hydrolysiertem Collagen umfasst.

7. Zusammensetzung gemäß einem der Ansprüche 1-6, wobei die Viskosität der Zusammensetzung bei 20 °C und einer Scherrate von 100 s⁻¹ 150 mPa.s oder weniger beträgt.

8. Zusammensetzung gemäß einem der Ansprüche 1-7, wobei die Zusammensetzung eine Energiedichte von 1,5 kcal/ml oder höher aufweist.

9. Zusammensetzung gemäß einem der Ansprüche 1-8, wobei die Zusammensetzung ferner Fett und/oder Kohlenhydrat umfasst.

10. Zusammensetzung gemäß einem der Ansprüche 1-9, wobei die Zusammensetzung ferner einen Chelatbildner in einer Menge von 0,5-10 g/l umfasst.

11. Zusammensetzung gemäß einem der Ansprüche 1-10, wobei der pH-Wert der Zusammensetzung in dem Bereich von 6 bis 8 liegt.

12. Proteinzusammensetzung, geeignet zur Verwendung bei der Herstellung der wärmebehandelten flüssigen Nahrungszusammensetzung gemäß einem der Ansprüche 1-11, wobei die Proteinzusammensetzung wenigstens 80 Gew.-% Protein, bezogen auf die Trockenmasse der Gesamtzusammensetzung, umfasst, wobei wenigstens 50 Gew.-% des Proteins micellares Kasein sind und wenigstens 10 Gew.-%, vorzugsweise wenigstens 15 Gew.-%, des Proteins hydrolysiertes Molkeprotein sind, bezogen auf die Trockenmasse des Proteins, wobei das hydrolysierte Molkeprotein eine Hydrolysegrad in dem Bereich von 1-25 % aufweist, wobei der Hydrolysegrad durch das Trinitrobenzolsulfonsäure(TNBS)-Verfahren bestimmt wird und auf den natürlichen Hydrolysegrad des Molkeproteins, das für die Herstellung des hydrolysierten Molekproteins verwendet worden ist, korrigiert wird.

13. Proteinzusammensetzung gemäß Anspruch 12, wobei die Zusammensetzung wenigstens 85 Gew.-% Protein, bezogen auf die Trockenmasse der Zusammensetzung, umfasst.

14. Proteinzusammensetzung gemäß Anspruch 12 oder Anspruch 13, wobei die Proteinzusammensetzung 60-90 Gew.-% micellares Kasein und 10-40 Gew.-% hydrolysiertes Molkeprotein, bezogen auf das gesamte Protein, umfasst.

15. Proteinzusammensetzung gemäß einem der Ansprüche 12-14, wobei die Zusammensetzung ferner ein oder mehrere Proteine ausgewählt aus der Gruppe bestehend aus intaktem Molkeprotein, intaktem oder hydrolysiertem Kaseinat, intaktem oder hydrolysiertem Pflanzenprotein, intaktem oder hydrolysiertem Algenprotein und hydrolysiertem Collagen umfasst.

16. Verfahren zur Herstellung der Proteinzusammensetzung gemäß einem der Ansprüche 12-15, wobei das Verfahren umfasst:
(i) Bereitstellen einer Zusammensetzung, die micellares Kasein und Wasser umfasst;
(ii) Bereitstellen einer Zusammensetzung, die hydrolysiertes Molkeprotein und Wasser umfasst;
(iii) Nassmischen des Gemischs von Schritt (i) und des Gemischs von Schritt (ii); und
(iv) gegebenenfalls Trocknen des Gemischs von Schritt (iii), um die Proteinzusammensetzung in der Form eines partikelförmigen Produkts zu erhalten;
oder:
(i) Bereitstellen einer Zusammensetzung, die micellares Kasein in der Form eines partikelförmigen Produkts umfasst;
(ii) Bereitstellen einer Zusammensetzung, die hydrolysiertes Molkeprotein in der Form eines partikelförmigen Produkts umfasst; und
(iii) Trockenmischen des Gemischs von Schritt (i) und des Gemischs von Schritt (ii).

17. Verfahren zur Herstellung der Nahrungszusammensetzung gemäß einem der Ansprüche 1-11, wobei das Verfahren umfasst:
(a) Bereitstellen einer Zusammensetzung, die Wasser und die Proteinzusammensetzung gemäß einem der Ansprüche 12-15 umfasst und gegebenenfalls ferner Kohlenhydrat, Fett, Vitamine und/oder Mineralstoffe umfasst; und
(b) Unterwerfen der erhaltenen Zusammensetzung an eine Wärmebehandlung.

18. Verwendung der Proteinzusammensetzung gemäß einem der Ansprüche 12-15 für die Herstellung der wärmebehandelten Nahrungszusammensetzung gemäß einem der Ansprüche 1-11.

## Revendications

1. Composition nutritionnelle liquide traitée à la chaleur comprenant 8 à 20 g de protéines par 100 ml de la composition, au moins 50 % en poids des protéines étant de la caséine micellaire et au moins 10 % en poids des protéines étant des protéines de petit-lait hydrolysées, les protéines de petit-lait hydrolysées possédant un degré d'hydrolyse dans la plage de 1 à 25 %, le degré d'hydrolyse étant déterminé par la procédure à l'acide trinitrobenzènesulfonique (TNBS) et étant corrigé par rapport au degré naturel d'hydrolyse des protéines de petit-lait qui ont été utilisés pour la préparation des protéines de petit-lait hydrolysées.

2. Composition selon la revendication 1, la composition comprenant 9 à 18 g de protéines par 100 ml de la composition.

3. Composition selon la revendication 1 ou la revendication 2, au moins 15 % en poids des protéines étant des protéines de petit-lait hydrolysées.

4. Composition selon l'une quelconque des revendications 1 à 3, 60 à 90 % en poids des protéines étant de la caséine micellaire et 10 à 40 % en poids des protéines étant des protéines de petit-lait hydrolysées.

5. Composition selon l'une quelconque des revendications 1 à 4, la caséine micellaire et les protéines de petit-lait hydrolysées constituant ensemble au moins 70 % en poids des protéines, sur la base des protéines totales, préférablement au moins 75, plus préférablement au moins 80 % en poids, encore plus préférablement au moins 85 % en poids, même encore plus préférablement au moins 90 % en poids et le plus préférablement au moins 95 % en poids des protéines, tous basés sur les protéines totales.

6. Composition selon l'une quelconque des revendications 1 à 5, les protéines comprenant en outre une ou plusieurs protéines choisies dans le groupe constitué par des protéines de petit-lait intactes, du caséinate intact ou hydrolysé, des protéines végétales intactes ou hydrolysées, des protéines d'algues intactes ou hydrolysées et du collagène hydrolysé.

7. Composition selon l'une quelconque des revendications 1 à 6, la viscosité de la composition étant de 150 mPa.s ou moins, à 20 °C et à un taux de cisaillement de 100 s⁻¹.

8. Composition selon l'une quelconque des revendications 1 à 7, la composition possédant une densité d'énergie de 1,5 kcal/ml ou plus.

9. Composition selon l'une quelconque des revendications 1 à 8, la composition comprenant en outre des lipides et/ou des glucides.

10. Composition selon l'une quelconque des revendications 1 à 9, la composition comprenant en outre un agent chélatant en une quantité de 0,5 à 10 g/l.

11. Composition selon l'une quelconque des revendications 1 à 10, le pH de la composition étant dans la plage de 6 à 8.

12. Composition de protéines appropriée pour une utilisation dans la fabrication de la composition nutritionnelle liquide traitée à la chaleur selon l'une quelconque des revendications 1 à 11, ladite composition de protéines comprenant au moins 80 % en poids de protéines, sur une base de matière sèche de la composition totale, au moins 50 % en poids des protéines étant de la caséine micellaire et au moins 10 % en poids, préférablement au moins 15 % en poids, des protéines étant des protéines de petit-lait hydrolysées, sur une base de matière sèche de la composition totale, les protéines de petit-lait hydrolysées possédant un degré d'hydrolyse dans la plage de 1 à 25 %, le degré d'hydrolyse étant déterminé par la procédure à l'acide trinitrobenzènesulfonique (TNBS) et étant corrigé par rapport au degré naturel d'hydrolyse des protéines de petit-lait qui ont été utilisés pour la préparation des protéines de petit-lait hydrolysées.

13. Composition de protéines selon la revendication 12, la composition comprenant au moins 85 % en poids de protéines sur une base de matière sèche de la composition.

14. Composition de protéines selon la revendication 12 ou la revendication 13, la composition de protéines comprenant 60 à 90 % en poids de caséine micellaire et 10 à 40 % en poids de protéines de petit-lait hydrolysées, sur la base des protéines totales.

15. Composition de protéines selon l'une quelconque des revendications 12 à 14, la composition comprenant en outre une ou plusieurs protéines choisies dans le groupe constitué par des protéines de petit-lait intactes, du caséinate intact ou hydrolysé, des protéines végétales intactes ou hydrolysées, des protéines d'algues intactes ou hydrolysées et du collagène hydrolysé.

16. Procédé pour la fabrication de la composition de protéines selon l'une quelconque des revendications 12 à 15, le procédé comprenant :
(i) la mise à disposition d'une composition comprenant de la caséine micellaire et de l'eau ;
(ii) la mise à disposition d'une composition comprenant des protéines de petit-lait hydrolysées et de l'eau ;
(iii) le mélange à l'état mouillé du mélange de l'étape (i) et du mélange de l'étape (ii) ; et
(iv) éventuellement le séchage du mélange de l'étape (iii) afin d'obtenir la composition de protéines sous forme d'un produit particulaire ;
ou :
(i) la mise à disposition d'une composition comprenant de la caséine micellaire sous forme d'un produit particulaire ;
(ii) la mise à disposition d'une composition comprenant des protéines de petit-lait hydrolysées sous forme d'un produit particulaire ; et
(iii) le mélangeage à sec du mélange de l'étape (i) et du mélange de l'étape (ii).

17. Procédé pour la fabrication de la composition nutritionnelle selon l'une quelconque des revendications 1 à 11, le procédé comprenant :
(a) la mise à disposition d'une composition comprenant de l'eau et la composition de protéines selon l'une quelconque des revendications 12 à 15, et éventuellement en outre comprenant des glucides, des lipides, des vitamines et/ou des minéraux ; et
(b) la soumission de la composition obtenue à un traitement à la chaleur.

18. Utilisation de la composition de protéines selon l'une quelconque des revendications 12 à 15 pour la fabrication de la composition nutritionnelle traitée à la chaleur selon l'une quelconque des revendications 1 à 11.
